Europäisches Patentamt

European Patent Office

Office européen des brevets

(11) Veröffentlichungsnummer: **0 207 265**
**A1**

## (12) EUROPÄISCHE PATENTANMELDUNG

(21) Anmeldenummer: **86106519.1**

(22) Anmeldetag: **14.05.86**

(51) Int. Cl.⁴: **F16H 25/24 , C23C 4/00**

(30) Priorität: **31.05.85 DD 276863**

(43) Veröffentlichungstag der Anmeldung:
**07.01.87 Patentblatt 87/02**

(84) Benannte Vertragsstaaten:
**DE FR GB IT NL SE**

(71) Anmelder: **VEB Kombinat-Robotron**
**Grunaer Strasse 2**
**DDR-8012 Dresden(DD)**

(72) Erfinder: **Starec, Rolf, Dipl.-Ing.**
**Karl-Marx-Allee 31**
**DDR-9010 Karl-Marx-Stadt(DD)**

(74) Vertreter: **Kuborn, Walter**
**Patentanwälte Kuborn & Dr. Paigen**
**Mulvanystrasse 2**
**D-4000 Düsseldorf(DE)**

(54) **Schraubgetriebe.**

(57) Die Erfindung betrifft ein Schraubgetriebe zum Umwandeln einer Drehbewegung in eine translatorische Bewegung hoher Präzision, das aus einer Schraubspindel und einer axial beweglichen Mutter besteht, wobei die Schraubspindel aus einer Antriebswelle und einem um die Antriebswelle - schraubenförmig gewickelten Draht besteht. Der Draht ist dabei mittels eines auf den Draht und die Antriebswelle aufgebrachten verschleißfesten, metallischen Beschichtungsmittels stoffschlüssig mit der Antriebswelle verbunden. Durch das Abwickeln des Drahtes nach der Oberflächenbeschichtung entsteht eine zweite Form der Gewindebildung. Es entsteht eine schraubenförmige Nut, in die mit der Mutter verbundene formschlüssige Elemente federnd eingreifen.

Fig.1

EP 0 207 265 A1

## Schraubgetriebe

Die Erfindung betrifft ein Schraubgetriebe zum Umwandeln einer Drehbewegung in eine translatorische Bewegung für den Einsatz in Geräten der Steuer-, Regel-und Meßtechnik, der Datenein-und Ausgabetechnik und der optischen Industrie (z.B. Foto-und Kinogeräte), also in Geräten der Feinmechanik.

Schraubgetriebe sind seit langem aus der Mechanik bekannt. Sie bestehen meist aus einer drehbar gelagerten Schraube und einer axial verschiebbaren Mutter. Werden die Schraubgetriebe zur Feineinstellung in Geräten der Feinmechanik benutzt, sind genau hergestellte Feingewinde erforderlich, so z.B. bei Meßschrauben, Meßschienen, Meßmikroskopen und Mikrometerschrauben - (Richter, O.; R.v. Voss, "Bauelemente der Feinmechanik", 1959, 8. Auflage, VEB Verlag Technik, Berlin, S. 433-439).

Zur Positionierung eines Magnetkopfes auf die konzentrischen Spuren einer Magnetplatte bzw. einer Diskette werden ebenfalls Schraubgetriebe eingesetzt. Diese bestehen aus einer Schraubspindel und einem mit dem Schlitten verbundenen Abnehmer, der aus einer zweiteiligen und radial verspannten Mutter oder einer federnd an der Verzahnung anliegenden Kugel besteht. Diese Maßnahme ist erforderlich, um das Gewindespiel zu vermeiden ( DE-AS 1 774 204, US-PS 4 030 137, DE-OS 2 754 014, DE-OS 2 812 621, US-PS 4 024 581).

Durch die zur Mikromechanik führende Entwicklung im Gerätebau werden an die Genauigkeit von Schraubgetrieben immer höhere Anforderungen gestellt. Mit einer minimalen Steigung von 0,5 mm sind bei den durch Schleifen hergestellten Schraubspindeln bereits die technischen Grenzen erreicht. Eine Verkleinerung des Durchmessers der Schraubspindel ist ebenfalls problematisch, da in diesem Fall die Steifigkeit der zwischen Spitzen aufzunehmenden Spindel verlorengeht. Dies ist nicht nur bezüglich einer weiterführenden Miniaturisierung von Nachteil, sondern auch aus dem Grund, daß dem meßtechnischen Grundsatz, dem Abbeschen Komparatorprinzip, Grenzen gesetzt werden ("Lexikon der Technik", VEB Bibliographisches Institut Leipzig, 1984, S. 382; Zill, H., "Messen und Lehren", Teubner Verlagsgesellschaft Leipzig, 1956, S. 108, S. 48 u. 49). Es sind zwar Getriebe bekannt geworden, deren Schaubspindel nicht durch Schleifen hergestellt wird, doch eignen sie sich nicht für Präzisionszwecke. Diese Getriebe werden in der Literatur als einfache Getriebe bezeichnet, da an sie keine hohen Genauigkeitsanforderungen gestellt werden und können. Die Einstellgenauigkeit braucht bei ihnen allenfalls im Zehntelmillimeter-aber nicht im $\mu$m-Bereich zu liegen, und auch das Auftreten eines Getreibespiels und einer Umkehrspanne ist ohne Belang.

Ein bekanntes Getriebe dieser Art besteht aus einer Welle, auf der eine Schraubenfeder aufgepreßt ist. Die so entstandene Schraubspindel oder Schnecke kämmt mit einem Stirnrad und bildet mit diesem ein Schneckenradgetriebe. Abgesehen von der fehlenden Evolventen-Paarung, wie sie für Präzisionszahnrädergetriebe erforderlich ist, dürfte das exakte Aufpressen einer Schraubenfeder und das gleichzeitige kraftschlüssige Fixieren der Drahtwindungen bei größeren Positionierbeschleunigungen der zu positionierenden Last in dem gewünschten $\mu$m-Genauigkeitsbereich nicht möglich sein (Richter/Voss a.a. Ort, S. 426-428).

Bei einem weiteren in der Literatur beschriebenen einfachen Getriebe, einem Schneckenradgetriebe, wird die Schnecke durch einen schraubenförmig aufgewickelten und auf einer glatten Welle aufgelöteten Stahldraht gebildet ("Feinwerktechnik", Kurt Hain, Gießen, 1953, S. 341). Auch dieses Getriebe ist nicht für Präzisionsantriebe geeignet. Ein Grund dafür besteht darin, daß infolge der beim Lötprozeß entstehenden Hitze der im Vergleich zur Länge der Schnecke wesentlich längere Stahldraht eine stärkere Ausdehnung erfährt als die Schnecke selbst und dadurch Lageveränderungen des Drahtes auf der Welle unvermeidlich sind.

Die Aufgabe der Erfindung besteht darin, ein Schraubgetriebe hoher Genauigkeit für Geräte der Feinmechanik zu schaffen, mit dessen Schraubspindel geringere und genauere Steigungen als die herkömmlicher und durch Schleifen gefertigter Feingewinde erzielt werden.

Erfindungsgemäß wird dies dadurch erreicht, daß die Schraubspindel aus einer Antriebswelle und einem um die Antriebswelle schraubenförmig gewickelten Draht besteht, der das Gewinde der Schraubspindel nachbildet und der mittels eines auf den Draht und die Antriebswelle aufgebrachten verschleißfesten, metallischen Beschichtungsmittels stoffschlüssig mit der Antriebswelle verbunden ist. Der Draht ist von der Antriebswelle abwickelbar, so daß das Gewinde durch die entstandene Nut und das auf der Antriebswelle verbliebene Beschichtungsmittel gebildet wird. Mit der Mutter des Schraubgetriebes verbundene Elemente greifen formschlüssig und federnd in die schraubenförmige Nut ein.

Die Erfindung soll nachstehend anhand von drei Ausführungsbeispielen beschrieben werden.

Dabei stellen dar:

Fig. 1: das Prinzip des erfindungsgemäßen Schraubgetriebes,

Fig. 2: das Schraubgetriebe mit einem Positionierelement.

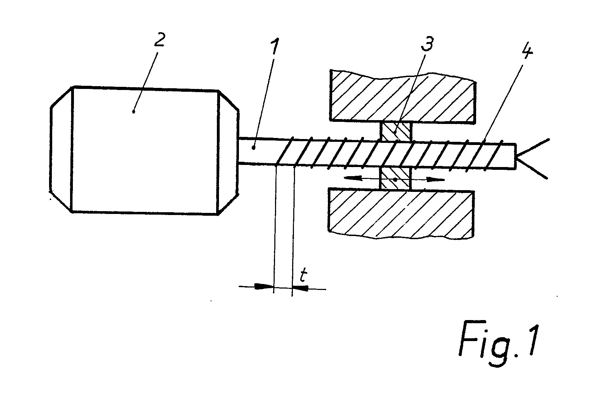

Gemäß Fig. 1 besteht das Schraubgetriebe aus einer Antriebswelle 1 eines Stellmotors 2, der zu Positionierzwecken meist als Rotationsmotor ausgeführt ist, und einer geradegeführten Mutter 3. Um die Antriebswelle 1 ist ein gegenüber dem Durchmesser der Antriebswelle 1 relativ dünner Draht 4 schraubenförmig gewickelt. Der Draht 4 ist mittels eines verschleißfesten, metallischen Beschichtungsmittels, wie z.B. Chrom oder Nickel, mit der Antriebswelle 1 verbunden. Die aufgetragene verschleißfeste Schicht bedeckt dabei sowohl die Oberfläche des Drahtes 4 als auch die der Antriebswelle 1. Das Aufwickeln des Drahtes 4 erfolgt beispielsweise mit Hilfe eines abtastbaren Musterstabes. Die vorherige Einarbeitung eines Führungsganges in eine Mutter 3 aus Plast ist nicht erforderlich, da nach dem Prinzip der elastischen oder plastischen Selbstverformung das formideale Gegenstück zu der umwickelten und die Funktion der Schraubspindel ausübenden Antriebswelle 1 gebildet wird.

In dem Ausführungsbeispiel nach Fig. 2 ist die Mutter 3 als Schlitten ausgebildet, der ein Positionierelement 5 trägt. Bei dem Einsatz in Magnetplattenspeichern kann dieses einen Magnetkopf darstellen, der mit hoher Präzision auf eine bestimmte Spur der Magnetplatte eingestellt werden soll. Die Führung der Mutter 3 erfolgt auch in diesem Ausführungsbeisspiel wieder durch die Antriebswelle 1 selbst. Zur Drehsicherung des Schraubgetriebes gleitet ein Schlitz 6 der Mutter 3 auf einer ortsfesten Stange 7. Um eine zu große Reibung zwischen der Antriebswelle 1 und der Mutter 3 zu vermeiden, ist die Mutter 3 mit Führungsnasen 8 versehen, zwischen denen mit Schmiermittel getränkte Filzstreifen 9 eingelegt sind. Die Mutter 3 liegt somit lediglich mit diesen Führungsnasen 8 der Antriebswelle 1 auf, wobei in diesen Führungsnasen 8 das durch den Draht 4 und die Antriebswelle 1 gebildete Gewinde nach dem Prinzip der Plastischen Selbstverformung eingeprägt ist.

Gemäß einem weiteren Ausführungsbeispiel ist es möglich, das Gewinde der Schraubspindel durch die Abwicklung des Drahtes 4 von der Antriebswelle 1 nach der Beschichtung zu bilden. Es entsteht dadurch eine schraubenförmige Nut, in die formschlüssige Elemente wie Kugeln in Steigungsrichtung verlaufende Stiffte federnd eingreifen, die mit der Mutter 3 verbunden sind.

Die erfindungsgemäße Lösung zeichnet sich durch eine Anzahl von Vorteilen gegenüber bisher bekannten Lösungen aus. Neben dem ökonomischen Vorteil des verringerten Aufwandes bei der Feingewindeherstellung ermöglicht die erfindungsgemäße Lösung bei Verwendung entsprechend dünnen Drahtes extrem kleine oder große, aber auch unterschiedliche Steigungen auf ein und derselben Gewindespindel für den Einsatz in Schraubgetrieben. Durch die verschleißfeste, metallische Beschichtung sowohl des Drahtes 4 als auch der Antriebswelle 1 ist eine präzise und feste Lagefixierung des Drahtes 4 gegeben und Oberflächenhärten wie bei gehärteten, hochwertigen Stählen erzielbar und dies ohne jeglichen Härteverzug.

Das Abwickeln des Drahtes 4 nach der Oberflächenbeschichtung hinterläßt eine mikroskopisch äußerst exakte Rille und garantiert eine präzise Bewegungsübertragung.

Aufstellung der verwendeten Bezugszeichen

1 Antriebswelle
2 Stellmotor
3 Mutter
4 Draht
5 Positionierelement
6 Schlitz
7 Stange
8 Führungsnase
9 Filzstreifen

## Ansprüche

1. Schraubgetriebe zum Umwandeln einer Drehbewegung in eine translatorische Bewegung hoher Präzision, das aus einer Schraubspindel und einer axial beweglichen Mutter besteht, dadurch gekennzeichnet, daß die Schraubspindel aus einer Antriebswelle (1) und einem um die Antriebswelle - (1) schraubenförmig gewickelten Draht (4) gebildet ist und daß der Draht (4) mittels eines auf den Draht (4) und die Antriebswelle (1) aufgebrachten verschleißfesten, metallischen Beschichtungsmittels stoffschlüssig mit der Antriebswelle (1) verbunden ist.

2. Schraubgetriebe nach Anspruch 1, dadurch gekennzeichnet, daß der Draht (4) von der Antriebswelle (1) abwickelbar ist und das Gewinde der Schraubspindel durch die entstandene - schraubenförmige Nut und das auf der Antriebswelle (1) verbliebene Beschichtungsmittel gebildet wird.

3. Schraubgetriebe nach Anspruch 2, dadurch gekennzeichnet, daß mit der Mutter (3) verbundene formschlüssige Elemente in die schraubenförmige Nut eingreifen.

*Fig.1*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-U-1 964 035  (T. BERGEMANN) <br> * das ganze Dokument * | 1 | F 16 H   25/24 <br> C 23 C    4/00 |
| Y | DE-A-2 405 490  (J. VAILLANT) <br> * Seite 6, Zeilen 1-10; Ansprüche 1, 3; Figur 5 * | 1 | |
| A | US-A-3 534 626  (W.I. ELLIOTT et al.) <br> * das ganze Dokument * | 1 | |
| A | DE-C-  810 223  (DEUTSCHE EDELSTAHLWERKE) <br> * Ansprüche 1, 4; Seite 3, Zeilen 10-13; Figuren 1-5 * | 2 | |
| A | GB-A-  982 731  (VEB PENTACON DRESDEN KAMERA-UND KINOWERKE) <br> * Ansprüche 1-4; Figuren 1, 2 * | 2 | RECHERCHIERTE SACHGEBIETE (Int. Cl.4) <br><br> B 21 F   15/00 <br> C 23 C    4/00 <br> F 16 H   25/00 |
| A | US-A-4 395 924  (CALLAHAN) <br> * Zusammenfassung; Figur 2 * | 3 | |
| A | US-A-3 053 689  (SHOUDY et al.) | | |

Der vorliegende Recherchenbericht wurde für alle Patentansprüche erstellt.

| Recherchenort <br> BERLIN | Abschlußdatum der Recherche <br> 26-08-1986 | Prüfer <br> LEMBLE Y.A.F.M. |
|---|---|---|